# EUROPEAN PATENT SPECIFICATION

(11) **EP 0 287 224 B1**
(45) Date of publication and mention of the grant of the patent: **29.11.1995**
(21) Application number: 88302535.5
(22) Date of filing: 23.03.1988
(51) Int. Cl.: B01D 53/34

(54) **Methods of removing NOx and SOx emissions from combustion systems using nitrogenous compounds**
Methode zum Entfernen von NOx- und SOx-Emissionen aus Verbrennungssystemen unter Verwendung stickstoffhaltiger Verbindungen
Méthode d'élimination des émissions de NOx et de SOx des systèmes de combustion en utilisant des composants contenant de l'azote

(30) Priority: 16.04.1987 US 39324; 15.07.1987 US 73980
(43) Date of publication of application: 19.10.1988
(73) Proprietor: ENERGY AND ENVIRONMENTAL RESEARCH CORPORATION, Irvine California 92714 (US)
(72) Inventor: Heap, Michael P., Corona Del Mar, California 92625 (US); MCCarthy, James M., Laguna Beach, California 92651 (US); Chen, Shih L., Irvine, California 92720 (US); Pershing, David W., Salt Lake City, Utah 84103 (US)
(74) Representative: Orr, William McLean

(56) References cited:
- WO-A-87/06923
- DE-A- 3 447 616
- GB-A- 1 488 087
- US-A- 4 335 084

## Description

### The Field of the Invention

The present invention is related to methods for reducing nitrogen oxide ("NOₓ") emissions from pollution sources, such as combustion systems. More particularly, the present invention relates to the noncatalytic, selective reduction of NOₓ by -NH and -CN containing compounds to achieve very low levels of NOₓ emissions.

### The Background of the Invention

One of the major problems in industrialized society is the production of air pollution from numerous sources. Air pollution can take various forms. Some of the different types of air pollutants include particulate emissions such as coal ash, partially burned coal particles, and the like, sulfur compounds such as SO₂ and SO₃ (sometimes collectively referred to as "SOₓ"), ozone, carbon oxide emissions, volatile hydrocarbon emissions, and emissions of nitrogen oxides (commonly referred to collectively as "NOₓ"). Pollution sources include automobiles, industrial plants, small commercial establishments, such as dry cleaners and service stations, and even nature itself.

Combustion effluents and waste products from particular types of sources have proven to be major contributors to damaging air pollution when the effluents are discharged into the atmosphere. Unless these waste products are treated before their release into the atmosphere, serious smog and air pollution problems are encountered.

It will be appreciated that high concentrations of air pollutants have serious deleterious impacts on the health and general welfare of society. Air pollution is known to aggravate certain medical conditions (such as heart and lung problems) and is known to cause problems in the environment, ranging from corrosion to acid rain.

One of the most common components found in polluted air is nitrogen dioxide ("NO₂") which is known to be toxic. Nitrogen dioxide, which is brown in color, undergoes a series of reactions, known generally as "photochemical smog formation," in the presence of sunlight and airborne hydrocarbons. These reactions result in a marked decline in overall air quality.

While NO₂ is produced from a wide variety of pollution sources, its primary source is from nitric oxide ("NO") released into the air. NO is commonly formed during combustion processes, including internal combustion engines in automobiles, hydrocarbon fuel power plants, process furnaces, incinerators, coal-fired utility boilers, glass furnaces, cement kilns, oil field steam generators, gas turbines, and other similar installations.

There are two primary mechanisms for the formation of nitrogen oxides in the combustion processes. Within the high temperature portions of a flame, atmospheric oxygen can react with molecular nitrogen ("N₂") to form NO by the high temperature "thermal fixation" mechanism.

In addition, fuels which contain large amounts of nitrogen chemically bound within the fuel structure may produce significant NOₓ emissions as a result of the oxidation of the fuel nitrogen during the burning process. This source of NOₓ emission (often termed "fuel NOₓ") is the predominant source of NOₓ with the combustion of coal, heavy oils, biological and agricultural residues, and some municipal, industrial, and agricultural wastes.

Since NO is the only oxide of nitrogen which is stable at the high temperatures encountered in these types of combustion processes, NO is the predominant nitrogen emission product. At normal atmospheric temperatures, however, the equilibrium between NO and NO₂ favors NO₂. Hence, NO formed by combustion is generally discharged into the atmosphere as NO, and only subsequently converted to NO₂. In order to control NO₂ emissions, therefore, it is necessary to eliminate NO before it enters the atmosphere.

There have been considerable efforts in the art to find effective ways to remove oxides of nitrogen from waste gases so that these waste gases may be discharged to the atmosphere without harm to the environment.

Because the "thermal fixation" of atmospheric nitrogen is exclusively a high temperature phenomenon, occurring above 2800°F (1540°C), it has been possible to achieve significant reductions in NOₓ emissions from the combustion of nitrogen-free fuels (such as natural gas or gasoline) by reducing the overall temperature in the combustion zone. This is accomplished using techniques such as exhaust gas recirculation in automobiles or flue gas recirculation in utility boilers.

Fuel NOₓ formation is most easily controlled by limiting the amount of oxygen present during the period in which the nitrogen species are being evolved from the fuel matrix. Techniques such as a staged combustion, overfire air addition, and "burners out of service" all use this concept to limit fuel and nitrogen oxidation.

More recently, it has been recognized that limited amounts of hydrocarbon fuels, particularly those which do not contain fuel nitrogen, can be used to effectively incinerate NO formed in the main combustion zone by creating a fuel rich (oxygen deficient) environment downstream of the primary combustion zone. This technique is generically termed "reburning," and like the other combustion modification techniques, is capable of producing overall NOₓ reductions in excess of 50% under optimized conditions.

Unfortunately, at the present time, none of the combustion modification techniques are capable of producing very high levels of NOₓ control in the range of approximately 80% to 90%. To achieve extremely low NOₓ emission levels, it is necessary to utilize some type of downstream, effluent gas cleanup system.

It has been found in the art that removal of NO₂ from a combustion effluent stream is relatively easy since it reacts with water and air to form nitric acid. NO₂, therefore, is commonly removed by aqueous scrubbing. If a base, such as ammonia, is added to the scrub water, the nitrogen scrubbing process is facilitated and ammonium nitrate is produced. If limited amounts of NO are present along with the NO₂, the NO may be coscrubbed, thereby yielding ammonium nitrate.

Most chemical scrubbing techniques are subject to the limitation that they are only effective for mixtures of nitrogen oxides which are predominantly NO₂, rather than predominantly NO. This presents a problem because NO is the predominant species at the high temperatures generally encountered in flue gases. As a result, various processes have been developed in the art for oxidizing NO to NO₂ so that the relatively inexpensive and convenient scrubbing processes may take place.

Several processes known in the prior art involve contacting the gaseous flow which includes NO, with various organic compounds (such as aldehydes, alcohols, ketones, organic acids, and the like) in the presence of oxygen. By such processes, the NO is oxidized to NO₂ which can then be removed by scrubbing as described above. None of these processes, however, are capable of efficiently producing very low levels of NOₓ emissions.

An alternative approach for removing NO from flue gases and other streams of pollutants is to reduce NO to nitrogen and water, which may then be discharged to the atmosphere. Reduction of NOₓ may be accomplished with or without catalytic assistance. Practically, the noncatalytic processes are preferable because they are not subject to the usual disadvantages of employing catalysts. Some of these additional disadvantages include higher expense associated with the catalyst, the potential of catalyst plugging, the expense and difficulty of contacting the combustion effluents with the catalyst, and the danger that the catalyst will disintegrate and be emitted into the atmosphere.

Alternatively, NOₓ reduction processes often teach the removal of NOₓ from flue gases by reduction of the NO by the addition of ammonia, urea, or ammonia precursors, alone or in combination with some other combustional material, while the waste gas is at a relatively high temperature (generally from about 700°C to about 1200°C).

An example of such an NO reduction process is described in US-A-3,900,554 to Lyon, issued August 19, 1975, entitled "Method for the Reduction of the Concentration of NO in Combustion Effluents Using Ammonia." The process disclosed in that patent teaches the reduction of NO to N₂ by injecting ammonia under excess oxygen conditions into the combustion effluent stream at a temperature from about 870°C to about 1100°C. If the ammonia is injected along with a second reducing agent, such as hydrogen, NO will be reduced at temperatures as low as 700°C.

In US-A-4,208,386 to Arand, et al., issued June 17, 1980, entitled "Urea Reduction of NOₓ and Combustion of Effluents," a method for selectively reducing NOₓ in combustion effluents containing at least 0.1 volume percent oxygen at temperatures in excess of 1300°F (700°C) is described. As with the Lyon invention for ammonia, the optimum temperature window for urea injection under excess air conditions is relatively low (1300-2000°F; 700-1100°C).

In a subsequent US-A-4,325,924, again to Arand, et al., issued April 20, 1982, entitled "Urea Reduction of NOₓ in Fuel Rich Combustion Effluents," the authors disclose the existence of a high-temperature window (1900-3000°F; 1040-1650°C) where urea can also be used to selectively reduce NOₓ emissions under fuel-rich conditions.

The above-referenced material demonstrates that while NOₓ emissions can be selectively reduced by ammonia, ammonia producing compounds and urea, the optimum temperature appears to depend primarily on whether selective reduction reactions are being conducted under fuel-rich (high temperatures required: 1900-3000°F; 1040-1650°C) or fuel-lean conditions (moderate temperatures: 1300-2000°F; 700-1100°C).

One investigator has suggested that cyanuric acid could possibly serve as a species for reducing NOₓ. Perry, et al., "Rapid Reduction of Nitrogen Oxides in Exhaust Gas Streams," Nature pp. 657-658 (December 1986) (hereinafter "Perry Process"). Perry states that NOₓ can be reduced by using isocyanuric acid (produced by decomposing cyanuric acid) at temperatures above 600°C (1100°F). Perry further reports "the absence of the need for controlled amounts of oxygen." While that process reportedly showed some possible benefits for use in reducing the level of NOₓ emission in the laboratory setting, the reported results have not been duplicated in actual combustion application.

It is presently believed that two primary factors account for the discrepancy between the results achieved by the Perry Process and those results obtained in actual application. Perry conducted the "flow tube reactor" experiments in an inert atmosphere. When typical other combustion species such as CO₂, CO, and water are present in the reaction atmosphere, however, the beneficial reduction of NOₓ by cyanuric acid is markedly changed, especially with respect to the optimum temperature and the influence of oxygen.

Similarly, it is believed that by conducting experiments in the presence of stainless steel, Perry produced drastically different results than those achieved with no stainless steel present. It is presently believed that the stainless steel acted as a catalyst of the reaction. As a result, while the use of cyanuric acid provided some hope for obtaining low levels of NOₓ emission at moderate temperatures (600°C to 1100°C), in actual combustion application, the reduction of NOₓ by cyanuric acid has been found to be ineffective at moderate temperatures, and at best, no more effective than existing techniques at high temperatures.

Another group of pollutants which are of major importance are the sulfur oxides (generally collectively designated "SOₓ"). Sulfur oxides are primarily emitted in the form of sulfur dioxide ("SO₂"), with small amounts of accompanying sulfur trioxide ("SO₃"). Since there is no harmless gas phase sulfur species analogous to N₂, combustion modification has not been useful for controlling SOₓ emissions. Exhaust gas cleanup systems, however, including both wet scrubbing and spray drying techniques, are well known and effective.

High temperature (1800°F to 2800°F; 980-1540°C) injection of dry, pulverized limestone has also been used to reduce sulfur emissions. In addition, several recent investigations have shown that hydrated lime (Ca(OH)₂) is effective in reducing SOₓ emissions. None of the current literature, however, shows that dry sorbent injection can be directly combined with reducing agent injection to achieve optimum NOₓ and SOₓ control simultaneously and with relatively small capital cost. Such a process would be a major advancement in the art.

A process according to the pre-characterising part of claim 1 is also known from US-A-4,335,084 to Brogan,entitled "method for reducing NOₓ emissions from combustion process". This document discloses a two zone noncatalytic process for selectively reducing NOₓ in combustion effluent streams, in which the reducing agent used is ammonia, which is introduced into and thoroughly mixed with the effluents in a first zone downstream of the actual combustion zone and with the temperature maintained in this first zone between 2,400°F (1315°C)/ 2,500°F (1370°C) and 3,000°F (1650°C). In this first zone, a stoichiometric air to fuel ratio is between 0.9 and 0.99, and after a certain time has elapsed, secondary air is added in a second downstream zone to complete combustion at a temperature below 2,400°F (1315°C).

Earlier application WO-A-87/06923 to Perry (published 19.11.87, filing date 05.05.87, priority date 05.05.86) discloses a process comprising the introduction of gaseous HNCO into NOx containing combustion effluents. The HNCO gas is obtained by sublimation of cyanuric acid in a separate chamber. The process is said to be insensitive to the presence of oxygen. The decomposition of HNCO in a fuel-rich zone followed by a reaction with NOx in a oxygen-rich zone is not disclosed.

From the discussion above, it is apparent that what is currently needed in the art are methods for the selective, noncatalytic reduction of NOₓ which produce very low NOₓ emissions. It would be an advancement in the art to provide such methods which employed a process which effectively produced emission levels below 100 ppm without a catalyst and using inexpensive and readily available reactants.

The method of the invention, as delineated in claim 1, fulfils these needs.

The method of the invention overcomes the disadvantages of the prior art methods. In particular, temperatures lower than the ones mentioned in the Brogan patent US-A-4,335,084 can be used to achieve very low NOₓ emissions.

The invention therefore teaches the reduction of NOₓ with any suitable reducing agent having at least one functional group selected from the group comprising -NH and -CN, such as NH₃, urea, cyanuric acid, and related compounds. Contrary to the teachings of the existing literature, however, the present invention teaches a two-step reaction process under carefully controlled conditions for reducing NOₓ to very low levels.

Initially, the selective reducing agent (such as ammonium sulfate, urea, or cyanuric acid) is decomposed. It is presently believed that this decomposition forms NH₂ radicals. This reaction takes place in an oxygen-free or oxygen-deficient, fuel-rich "decomposition zone." For example, when cyanuric acid is decomposed, it is most likely to form isocyanic acid. The general mechanism for producing isocyanic acid from cyanuric acid is as follows:

(HOCN)₃ --------→ 3HNCO

It is presently preferred that the reaction temperature in this decomposition zone be maintained in the range of from 1200°F (650°C) to about 1900°F (1040°C) when NH₃, urea, or a related compound is the reducing agent, and preferably in the range of from 1400°F (760°C) to 1800°F (980°C) when cyanuric acid is the reducing agent.

It will be appreciated, furthermore, that NOₓ may or may not be a part of the oxygen deficient gases in the oxygen-free or oxygen-deficient, fuel-rich decomposition zone. That is, the production of the reaction intermediates in the oxygen-free or oxygen-deficient decomposition zone may take place within the combustion area ("combustion zone") which produces the effluents. Alternatively, reducing agent decomposition may occur at a location remote from the combustion zone in the presence of CO and water. If the second alternative is chosen, the reducing agent decomposition species will then be injected into the effluent stream at an appropriate location.

After the reducing agent is decomposed in the absence of oxygen, the decomposition stream is mixed with the effluent stream containing NOₓ. At this point, the oxygen level of the stream must be carefully controlled to provide an excess of oxygen. It may be necessary at this point to inject air into the effluent stream in order to maintain the proper conditions for NOₓ reduction.

In this reaction zone, NOₓ reduction takes place at temperatures in the range of from from 800°F to 2400°F (425°C to 1300°C). The selective reduction of NOₓ in this zone is relatively fast; but residence times in excess of at least 30 milliseconds are preferred in order to assure that complete micromixing occurs.

Preferably, the molar ratio of equivalent nitrogen (moles of nitrogen) in the reducing agent to nitrogen in NOₓ to be removed should be approximately 0.5:1 to approximately 10:1. Increasing the ratio of the reducing agent to the NOₓ increases the extent of NOₓ reaction; however, it may also increase the overall cost of the control technology and the probability of undesirable trace species produced by the reaction of the reducing agent being emitted.

The present invention may also be combined with SOₓ control technology. Specifically, species used to control SOₓ (such as limestone, dolomite, quicklime, and hydrated lime) may be added to the NOₓ reducing agent for injection into the effluent stream. Thus, simultaneous NOₓ and SOₓ control may be achieved.

It is, therefore, a primary object of the present invention to provide methods for reducing NOₓ emissions which are highly selective, noncatalytic, and which are capable of providing overall emission reductions in excess of 90% using a relatively low cost process.

It is a related object of the present invention to provide such methods which are capable of producing exhaust NOₓ emission levels at acceptably low levels which are significantly lower than those achieved under typical combustion conditions.

These objects are achieved by the methods of claim 1.

These and other objects of the invention will become apparent upon reading the following detailed description and appended claims, and upon reference to the appended drawings.

### BRIEF DESCRIPTION OF THE DRAWINGS

Figure 1 is a graph which illustrates the direct application of ammonia, urea, and related compounds according to the teachings of the existing literature under fuel-lean conditions.

Figure 2 is a graph which illustrates the selective reduction of NOₓ emissions with NH₃ injection under the mechanisms taught by Lyon (solid squares), and Brogan (solid diamonds) as compared to the 2-zone method of the present invention (open circles).

Figure 3 is a graph which illustrates the direct application of cyanuric acid injected according to the teachings of the existing literature under both fuel-rich and fuel-lean conditions.

Figure 4 is a graph which illustrates the reduction of NOₓ emissions under the mechanism taught by Perry and under both laboratory and actual conditions.

Figure 5 is a graph which illustrates the reduction of NOₓ emissions using the same amount of cyanuric acid as illustrated in Figure 1, but using the two-zone method of the present invention.

Figure 6 is a graph which illustrates the selective reduction of NOₓ emissions using urea injection under the mechanism taught by Arand et al. (solid symbols) under both fuel-rich and fuel-lean conditions compared to the 2-zone method of the present invention (open symbols).

Figure 7 is a graph which summarizes the influence of various NH and CN compounds on NOₓ emissions and CO emissions using the 2-zone method of the present invention.

Figure 8 is a graph which illustrates the influence of the decomposition zone stoichiometry.

Figure 9 is a graph which illustrates the influence of the reduction zone stoichiometry.

Figure 10 is a graph which illustrates the SOₓ reduction which can be achieved using a cyanuric acid/CaO slurry.

Figure 11 is a graph which illustrates the SO₂ capture which can be achieved with the CaO-slurry of this invention relative to the capture achieved with hydrated limes and raw CaO.

### DETAILED DESCRIPTION OF THE PREFERRED EMBODIMENTS

### I. General Discussion

The present invention is related to a two-stage reaction method for reducing NOₓ within an effluent stream using -NH or -CN decomposition products. The effluent stream may originate with a fixed facility such as a boiler, refinery heater, industrial furnace, gas turbine, municipal waste incinerator, or internal combustion engine, or with a mobile source such as a gasoline or diesel engine in a motor vehicle.

The present invention provides an extremely effective method of eliminating NOₓ pollutants. NOₓ pollutants can be reduced by more than approximately 90 percent, thereby producing exhaust NOₓ emission levels, under typical conditions, significantly below 100 ppm.

As mentioned above, the present invention operates by the use of an amine, or cyano containing selective reducing agent such as ammonium sulfate, urea, melamine, or cyanuric acid. Other potentially useful compounds include such species as ammonium carbonate, ammonium bicarbonate, ammonium formate, ammonium oxalate, ammonia, biuret, triuret, NH₂CN, Ca(CN)₂, CaCN₂, NaOCN, and dicyanodiamide.

Under the methods now known in the art, urea, ammonia, and ammonia salts are known to be useful as NOₓ reducing agents at temperatures between 1300 and 2000°F (700 and 1100°C) for fuel-lean injection and at temperatures from 1900 to 3000°F (1040 to 1650°C) for fuel-rich injection. However, the existing art does not teach that reductions can be achieved with low temperature, fuel-rich injection and it is incapable of producing emission levels significantly below 100 ppm. Indeed, current commercial practice is to employ selective high cost catalytic reduction processes when extremely low emission levels are required. The present invention overcomes the obstacles previously encountered when applying the prior art to actual practice.

As mentioned above, the present invention also operates by the use of cyanuric acid as an NOₓ reducing agent. Under the methods now known in the art, cyanuric acid is not useful as an NOₓ reducing agent under conditions typical of actual practice without the use of a stainless steel catalyst. The present invention overcomes the obstacles previously encountered in applying the Perry cyanuric acid process in actual practice.

In the first reaction zone of the present invention, the selective reducing agent is decomposed. As mentioned above, this reaction zone can be referred to generally as the "decomposition zone" and may be within the combustion zone which produces the NOₓ emissions, or it may be separate. Decomposition of the selective reducing agent is necessary in order to provide appropriate species which are effective for NOₓ reduction.

It is presently believed that the selective reducing agent proceeds by the following general reactions: 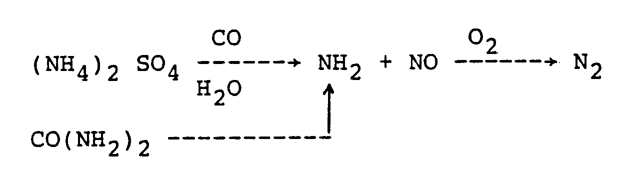
While the details of the decomposition process have not been fully characterized at the present time, it appears likely that NH and NH₂ are key intermediate species. It is presently believed that cyanuric acid decomposition proceeds by the following general reaction:

(HOCN)₃ --------→ 3HNCO

That is, cyanuric acid is decomposed to isocyanic acid in the presence of heat. It is possible that isocyanic acid intermediates or other products may participate in the result achieved by the present invention. For clarity of discussion, the reaction mechanisms shown above are discussed; however, these proposed mechanisms are not intended to limit the scope of the present invention.

The decomposition of the reducing agent must take place in a fuel-rich and oxygen-free or -deficient environment; thus, the decomposition can take place within the combustion effluent stream at a point where oxygen is deficient and the primary gas phase species are CO, CO₂, N₂, and H₂O. In the alternative, the decomposition of the reducing agent may take place in a separate, oxygen-free decomposition zone, probably containing CO and H₂O, but apart from the NOₓ containing effluent stream. The reducing agent may be injected in any of a number of forms. For example, a dry solid powder, an aqueous solution, a slurry, or an alcoholic solution have all been found to be acceptable.

The decomposition must take place at somewhat elevated temperatures. More specifically, the decomposition of reducing agent take place at temperatures from 1200°F (650°C) to 1900°F (1040°C) when NH₃, urea, or a related compound is the reducing agent, but when cyanuric acid is used as reducing agent temperatures between about 1400°F (760°C) to about 1800°F (980°C) are found to be most effective.

The time which the reducing agent spends within the decomposition zone should be sufficient to allow at least partial decomposition of the reducing agent species. The reaction time within this zone is preferably from approximately 0.005 seconds to approximately 5.0 seconds. More preferably, the time within the decomposition zone is from approximately 0.03 seconds to approximately 2.0 seconds.

Once the reducing agent is decomposed it may be introduced into the effluent stream in order to accomplish complete reduction of the NOₓ species within the stream. This second reaction zone must be at a location in the effluent stream which is oxygen rich.

For example, the reduction of NOₓ by the decomposed cyanuric acid species is believed to take place by the following global mechanism:

HNCO + NO ------→ N₂ + CO₂ + H₂O

The temperature within the reaction zone should be maintained within the range of 800°F (425°C) to 2400°F (1300°C).

The selective reduction of NOₓ by the decomposition product species occurs at a relatively fast pace. In order to assure complete reaction of the species, however, residence times from approximately 30 milliseconds to approximately 5.0 seconds are required. More preferably reaction times within the range of approximately 100 milliseconds to approximately 2.0 seconds are required.

It will be appreciated that under certain circumstances it may be desirable to enhance the effectiveness of the reaction zone by the addition of one or more reaction enhancers. These may include, for example, radical generating promoters such as hydrogen, methanol, natural gas, propane, carbon monoxide, and light petroleum fuels. The additional species may also include catalysts such as stainless steel, palladium, platinum, tungsten, nickel, cobalt, gold, silver, and manganese.

It is presently preferred that the molar ratio of equivalent nitrogen ("moles of N") in the reducing agent to the moles of N in the NOₓ to be removed should be in the range of from 0.5:1 to about 10:1. More specifically, the range of from about 0.7:1 to about 3:1 is preferred. Increasing the ratio of reducing agent to the NOₓ increases the extent of NOₓ reduction; however, it also increases the overall cost of the control technology, as well as the probability of additional undesired species being emitted.

It is also presently preferred that the air/fuel stoichiometric ratio within the decomposition zone be maintained within certain ranges. Air/fuel ratios within the range of about 0.7 to 1.0 are found acceptable, with the most preferred range being from about 0.9 to about 1.0.

In addition to providing NOₓ reduction, the present invention can also be used in conjunction with SOₓ control. As was mentioned above, injection of dry, pulverized limestone at temperatures from approximately 1800°F (980°C) to approximately 2800°F (1540°C) can be used to reduce sulfur emissions. In addition, hydrated lime ("Ca(OH)₂") is more effective than either the raw limestone or intermediate reactant CaO.

Thus, it is within the scope of the present invention to inject a dry sorbent (such as hydrated lime), in conjunction with the injection of the NOₓ reducing agent or its decomposition products. Therefore, sulfur reduction technology can easily be combined with the present invention in order to simultaneously reduce NOₓ and SOₓ emissions.

### II. Experimental Results

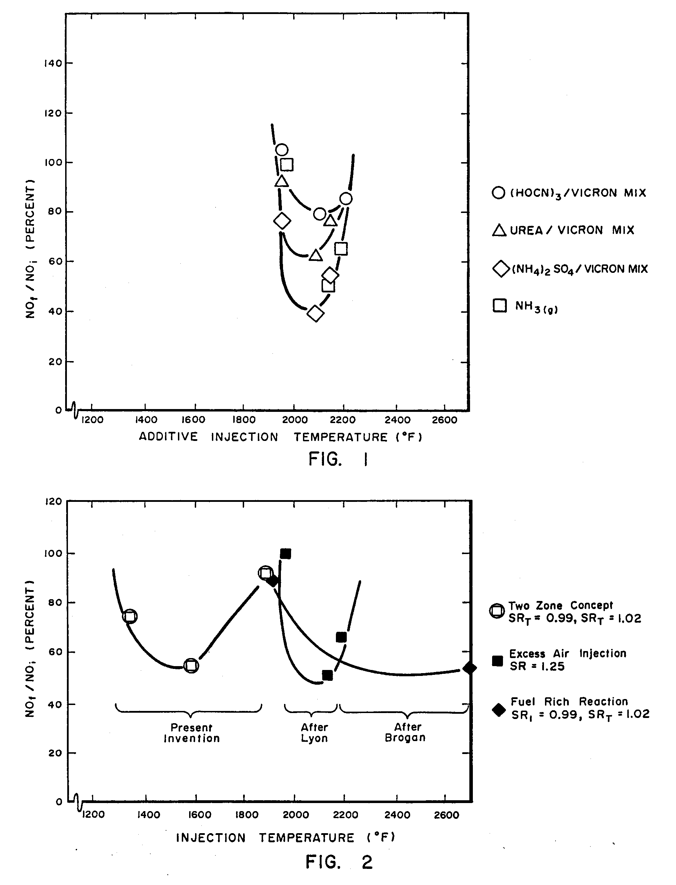

As noted briefly above, the existing literature reports that ammonia, ammonia salts, and urea can be used to reduce NOₓ emissions under excess air conditions at moderate temperatures. Figure 1 is a graphical representation of data obtained using the process described by Lyon for NH₃ and by Arand, et al. for urea.

The data set forth in Figure 1 were obtained in a six-inch diameter refractory lined furnace where the primary combustion zone was fired with natural gas at a firing rate of 50,000 BTU/hour. The gas phase NO concentration prior to the injection of the reducing agent ("NOᵢ") was 240 ppm. Ammonia was added in the form of a pure gas; the other compounds were added in the form of a dry powder mixed with an inert, limestone, to facilitate feeding. In each instance the nitrogen in the reducing agent was 1.5 times the molar nitrogen present as NO.

The data are presented with the vertical axis showing the ratio of final NO ("(NO)_{f}") to initial NO ("NOᵢ"). The horizontal axis represents injection temperature of the nitrogen reducing agent into the refractory-lined furnace.

The data shown on Figure 1 indicate that NOₓ reductions can be achieved using the process described by Lyon and Arand et al. Because this furnace is not an isothermal reactor, but rather the temperature is falling at approximately 700°F/second (370°C/second), the actual reaction temperature is always slightly lower than the apparent temperature at the point of injection. Thus, an optimum injection temperature of approximately 2100°F (1150°C) corresponds to an actual reaction temperature of 1800°F (980°C) to 1900°F (1040°C).

With further reference to Figure 1, a stoichiometric ratio ("SR") of 1.25 existed and indicates that 25% excess oxygen was present in the flue gas. Significant NO reductions were achieved with all of the compounds tested and the dependence with respect to temperature was similar for urea and the ammonia compounds. The best performance was achieved with ammonia and ammonium salts.

Figure 2 illustrates results obtained with the two zone concept of this invention relative to ammonia injection using the existing art. In the two-zone experiments, the NH₃ was injected at 1900°F (1040°C) and the temperature of the secondary air addition point was progressively decreased. These results clearly indicate that there exists a third regime not disclosed in the previous art where NH₃ can be injected under fuel-rich conditions and caused to decompose to produce intermediate species which are more effective than those produced by direct injection at higher temperatures under either fuel-rich or fuel-lean conditions.

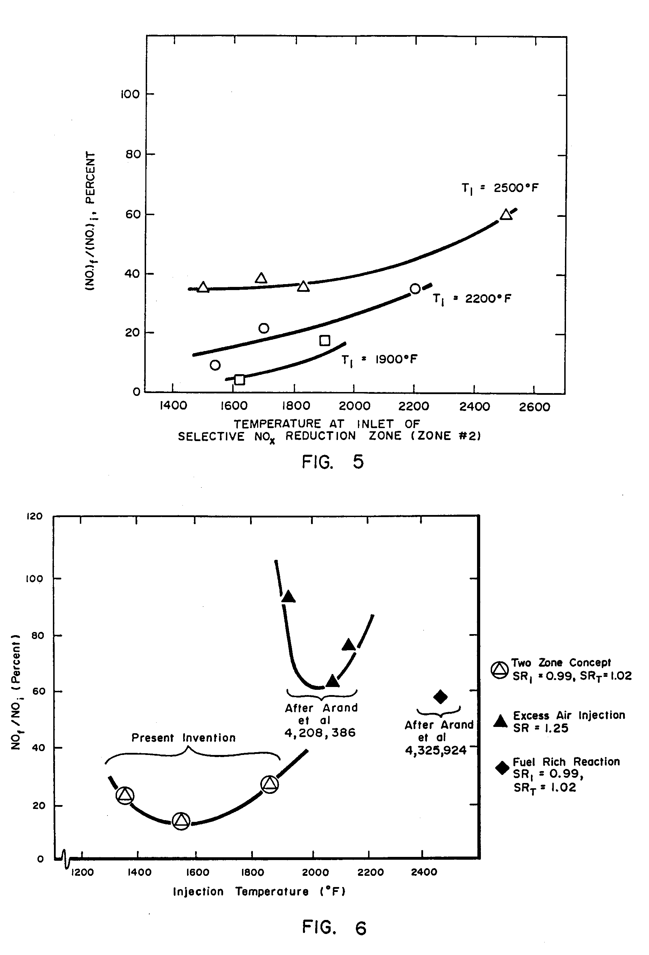

Figure 6 shows the results of an analogous set of experiments to those shown in Figure 2. Again these experiments use the 50,000 BTU/hr. refractory-lined furnace but with urea injection. The solid symbols indicate the existing art with high temperature urea injection under fuel-rich conditions and medium temperature urea injection under fuel-lean conditions as described by Arand, et al.

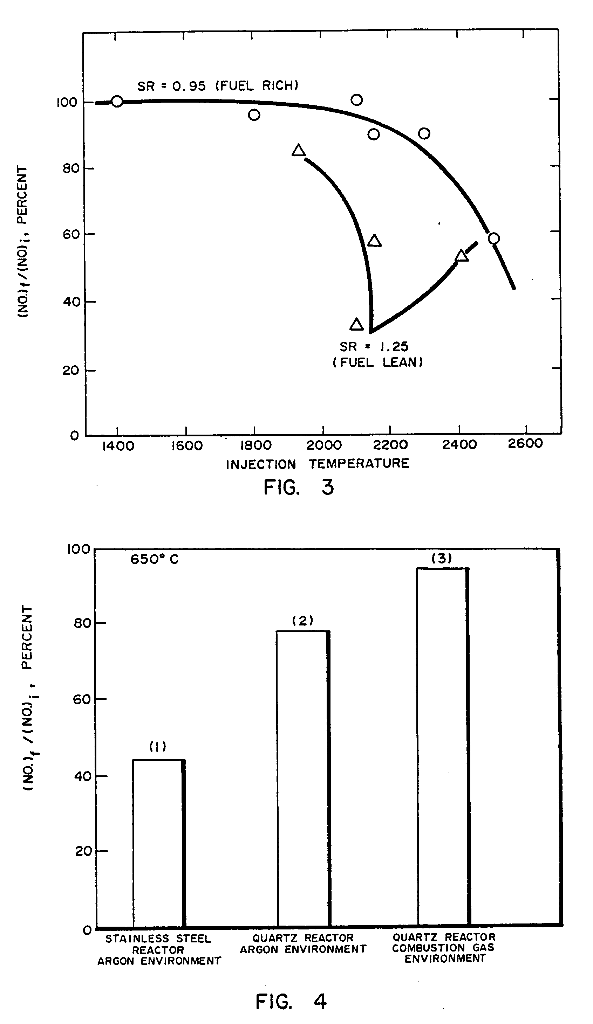

As discussed briefly above, the Perry, et al., article reports that cyanuric acid can be used to reduce NOₓ, supposedly without the need for controlled amounts of oxygen. Figure 3 is a graphical representation of data obtained using the process described by Perry et al. under combustion conditions. The data set forth in Figure 3 were obtained in a 6-inch diameter refractory-lined furnace where the primary combustion zone was fired with natural gas at a firing rate of 50,000 BTU/hour. The gas phase NO concentration prior to cyanuric acid injection ("(NO)ᵢ") was 600 ppm. The cyanuric acid was added in the form of a dry powder mixed with an inert limestone to facilitate feeding.

The data is presented with the vertical axis showing the ratio of final NO ((NO)_{f}) to initial NO ((NO)ᵢ). The horizontal axis represents injection temperature of cyanuric acid into the refractory lined furnace.

The data shown on Figure 3 indicates that NOₓ reductions can be achieved using the process of Perry et al., irrespective of oxygen concentrations at temperatures much higher than those reported by Perry.

With further reference to Figure 3, a stoichiometric ratio of 1.25 indicates that 25% excess oxygen was present in the flue gas. NO reductions were achieved under both fuel-rich (SR = 0.95) and fuel-lean (SR = 1.25) conditions. As would be expected from the existing literature, the optimum temperature is lower in the case of fuel-lean injection than with fuel-rich injection. In these experiments the stoichiometry remained constant throughout the reactor. The temperature of the cyanuric acid injection was varied by changing the location of the injection point.

While these results show that significant NOₓ reductions can be achieved using simple cyanuric acid injection, these results also suggest that (1) it is not possible to achieve extremely low NOₓ emissions if the cyanuric acid reducing agent is decomposed and reacted under the same stoichiometric conditions and (2) the process does not work at all in actual combustion gases at the temperatures reported by Perry. These results are consistent with the poor performance which has been observed in practice.

Figure 4 shows results which were obtained in a flow reactor substantially similar to that used by Perry except that the composition of the reactor wall could be changed as required. These data help explain the apparent disagreement between the results shown in Figure 1 and those reported by Perry.

If cyanuric acid is injected at 650°C into a stainless steel reactor containing only inert gases and NO, then significant NO reductions do indeed occur as reported by Perry (Bar 1). However, if the reactor has inert walls (e.g., quartz) or contains actual combustion products (e.g., CO, CO₂, H₂O, etc.), the reduction is greatly reduced (Bars 2 and 3). Hence, the process reported by Perry will not be effective in a real boiler or engine environment because combustion products will inevitably be present and the bulk of the gas will never contact the walls of the reactor (which will likely not be stainless steel).

Figure 5 shows the results of an analogous set of experiments to those shown in Figure 3 using the two zone process of the present invention. The experiments which produced the data which are set forth in Figure 5 were conducted with the same facility and under the same experimental conditions as that shown in Figure 3. In particular, the same injection method is used, the same furnace was used, and the same natural gas firing rate was used. In both cases the nitrogen equivalent of the added cyanuric acid was 1.5 times the inlet NO.

In the experiments illustrated in Figure 5, the cyanuric acid was decomposed in an oxygen deficient zone prior to the reduction of NOₓ. The overall stoichiometry in the oxygen deficient zone was 0.99 and the selective reaction was allowed to subsequently occur in a downstream zone with an overall stoichiometry of 1.02.

Again the temperature of the decomposition zone was varied by changing the location at which the cyanuric acid injection occurred. The temperature of the selective NOₓ reduction zone was varied by changing the location at which the final air was added in order to make the overall stoichiometry fuel lean.

The data presented in Figure 5 demonstrate that remarkably higher NOₓ reduction efficiencies can be achieved using the two zone process than that illustrated using the one zone process of Figure 3. In addition, a far broader window of acceptable performance exists in a process of the present invention as shown in Figure 5.

The results reported in Figure 5 indicate that optimum cyanuric acid decomposition zone temperatures are less than 2200°F, and the optimum selective NOₓ reduction temperature is between approximately 1400°F and approximately 1800°F for the particular residence time and profile used in these experiments. The residence times used in these experiments were from about 0.01 seconds to about 1.0 seconds for the cyanuric acid decomposition zone and from about 0.01 seconds to about 2.0 seconds for the selective NOₓ reduction zone.

Table 1 shows the results of detailed species measurements made within the two zones and in the exhaust. These data indicate that the two zone process does not produce significant quantities of ammonia ("NH₃") at any point in the process. This is probably because the likely key reactive intermediate is HNCO and not NH₃.

**Table 1**

| Species | Concentration at the end of the decomposition zone | Concentration at the end of the reaction zone |
|---|---|---|
| HCN | 1.0 ppm | 0.3 ppm |
| NH₃ | 3.0 ppm | < 0.1 ppm |
| HNCO | 540 ppm | < 0.1 ppm |

Figure 6 also shows data obtained with urea injection using the two zone concept of the present invention. The results using the present invention illustrate dramatically that significantly lower NOₓ levels can be achieved using the two zone concept with controlled stoichiometry than with either the fuel-lean or fuel-rich injection of the schemes of the existing art. Again, a far broader temperature window of acceptable performance exists for the process of the present invention as shown in Figure 6.

The results shown in Figure 6 indicate that the optimum urea decomposition zone temperatures are less than 1900°F (1040°C) and the optimum selective NOₓ reduction temperature is between approximately 1400°F (750°C) and approximately 1800°F (980°C) for the particular residence time, stoichiometry, and temperature profile used in these experiments. The residence times used in these experiments were from about 0.01 seconds to about 1.0 seconds for the urea decomposition zone and from about 0.1 seconds to about 2.0 seconds for the selective NOₓ reaction zone.

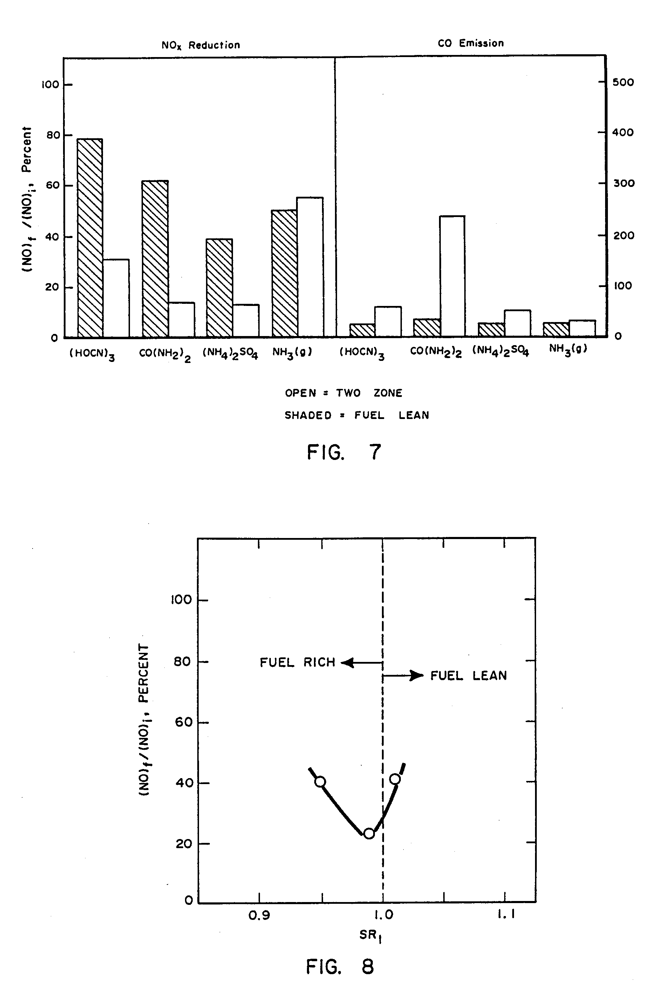

Figure 7 summarizes the optimum results obtained with the two zone concept of the present invention. These data were again obtained in the six-inch diameter refractory-lined tunnel furnace with an initial NO concentration of 240 ppm. The selective reducing agent was injected at a rate to provide a molar equivalent nitrogen ratio of 1.5 times the inlet NO. The stoichiometry in the decomposition zone was maintained at 0.99 and the overall stoichiometry, after the addition of the final burn out air in the reaction zone was maintained at 1.02 for the two zone process (open bars). The shaded bars indicate the NO reduction achieved with fuel-lean injection according to the existing art.

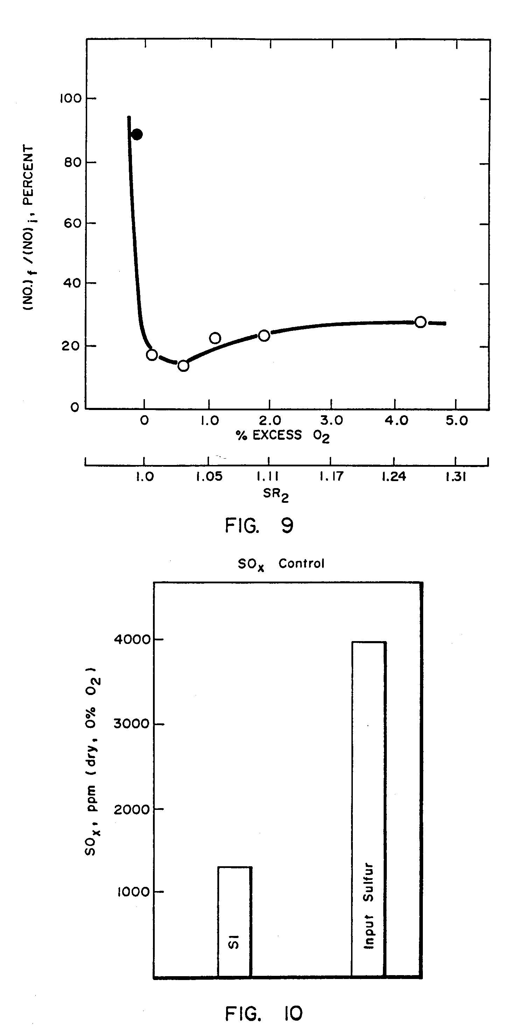

Figures 8 and 9 summarize the results of companion experiments designed to characterize the influence of local oxygen concentrations in both the decomposition zone and the reaction zone. Figure 8 illustrates the dependence of the selective NOₓ reduction zone on the stoichiometry in the cyanuric acid decomposition zone. These data suggest that the optimum environment for cyanuric acid decomposition is one deficient in oxygen where the primary gas phase species are CO₂, water, and nitrogen.

Figure 9 shows the impact of oxygen concentration in the selective NOₓ reaction zone. These data confirm that it is critically important that the NOₓ zone be operated with a slight excess of oxygen, and that further increases beyond approximately 0.5% oxygen only slightly degrade the performance of the overall process.

These data demonstrate that in the case of the solid materials (urea and ammonium sulfate), the NO reduction using the two zone process of this invention greatly exceeds that possible with the previous art under the conditions tested.

Figure 10 shows the results of testing using an NOₓ control agent in conjunction with CaO in the slurry form. The data presented in Figure 10 clearly indicate that it is possible to achieve major reductions of both NOₓ and SOₓ emissions using the combined reagents of cyanuric acid and CaO. The reactivity of CaO with respect to SO₂ is particularly surprising in view of previously reported literature on CaO injection which states that poor SO₂ control is achieved with injection of commercial grade CaO (relative to injection of limestone or hydrated lime). The enhancement of performance appears to be directly related to the use of the slurry injection mechanism.

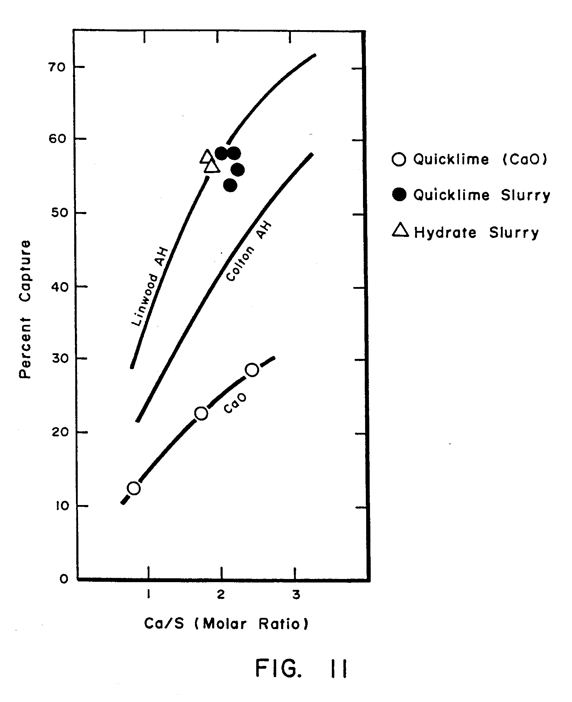

Figure 11 shows the results of testing using various SO₂ control concepts. The solid lines indicate typical performance by high and low efficiency atmospheric hydrates (Linwood and Colton respectively) and commercially produced lime (CaO). Figure 11 also shows data for a hydrate slurry (triangles) which resulted in essentially the same sulfur capture as was achieved with the hydrate alone. More importantly, however, Figure 11 illustrates data obtained with a quicklime slurry which indicate that very high capture levels can be achieved by simply slurrying commercial CaO and injecting the slurry under normal conditions at approximately 2300°F (1250°C). These data suggest that it is not necessary to externally hydrate the sorbent and dry it; the performance of the quicklime slurry is equivalent to that of the best commercial hydrate.

The experimental data presented above clearly indicate that using the two stage mechanism described above, very high levels of NOₓ control can be achieved. At the same time, if the NOₓ reducing agent is injected along with CaO or other sorbents, corresponding high levels of SOₓ control can be achieved. As a result, the present invention provides a clear advancement in the control of NOₓ and SOₓ emissions.

### III. Examples of Preferred Embodiments of the Present Invention

The following examples are given to illustrate the process of the present invention, but the examples are not intended to limit the scope of the present invention.

Examples 1, 2, 4, 6, 7, 9, 11, 15 and 16 are comparative examples, for the purpose of comparison with examples of the invention set out in examples 3, 5, 8, 10, 12, 13, 14 and 17 to 20.

### Example 1 (comparative)

In this example, a six-inch-diameter refractory-lined furnace was used and was fired by natural gas at a firing rate of 50,000 BTU/hour. The gas phase NO concentration prior to urea injection was about 240 ppm. Urea was injected into the furnace as a dry powder mixed with an inert substance (i.e., limestone) to facilitate handling.

The ratio of injected urea to NO in the combustion effluents was 1.5. The stoichiometric ratio within the furnace was approximately 1.25. That is, the furnace was operated so as to produce combustion effluents in which 25% excess O₂ was present. Urea was injected in the absence of O₂ at temperatures at about 2000°F (1100°C).

Under these conditions, about 40% reduction of NO was observed. This illustrates the fact that the injection of urea into combustion effluents in the presence of oxygen at moderate temperatures can produce some NOₓ reduction as described in the existing art. Exhaust concentrations dramatically below 100 ppm are, however, not achieved under these conditions.

### Example 2 (comparative)

In Example 2, the same facility as set forth in Example 1 was used. The nitrogen equivalent in the added urea was again 1.5 times the inlet NO which was 240 ppm.

In this example the urea was injected into an oxygen deficient zone with an overall stoichiometry of 0.99. The bulk gas temperature at the point of injection was about 2450°F (1340°C). The urea was allowed to selectively react with the NO during a residence time of approximately 300 milliseconds ("ms") after which additional air was added to bring the overall stoichiometry up to 1.02. The temperature at which the final burnout air was added was approximately 2250°F (1230°C).

Using these conditions, approximately 30% reduction of NO was observed. The final NO concentration was about 175 ppm. This illustrates the fact that injection of urea into a high temperature, fuel-rich zone can produce some selective reduction as described in the prior art, however, exhaust concentrations below 100 ppm are not achieved under these conditions.

### Example 3

In this example the same facility as that set forth in Example 1 was used. The gas phase NO concentration prior to urea injection was about 240 ppm and the nitrogen equivalent in the added urea was about 1.5 times the inlet NO.

In this example the urea was decomposed in an oxygen deficient zone with an overall stoichiometry of 0.99. The reaction of the urea decomposition products and NO was allowed to occur subsequently in a downstream zone with an overall stoichiometry of 1.02. The temperature at the point of urea injection in the decomposition zone was approximately 1870°F (1020°C) and the temperature in the reaction zone after the addition of the final burnout air was about 1550°F (850°C).

Under these conditions about 80% reduction of NO was observed. Final NO concentration was about 45 ppm. This example demonstrates that the use of the two zone concept with low temperature injection into an oxygen deficient zone can produce remarkably higher reduction efficiencies than high temperature, fuel-rich injection (Example 2) or direct excess air injection (Example 1).

### Example 4 (comparative)

In this example, a six-inch diameter refractory-lined furnace was used and was fired by natural gas at a firing rate of 50,000 BTU/hour. The gas phase NO concentration prior to cyanuric acid injection was about 600 ppm. Cyanuric acid was injected into the furnace as a dry powder mixed with an inert substance (e.g., limestone) to facilitate handling.

The ratio of injected cyanuric acid to NO in the combustion effluents was 1.5. The stoichiometric ratio within the furnace was approximately 0.95. That is, the furnace was operated so as to produce combustion effluents in which O₂ was deficient. Cyanuric acid was injected in the absence of O₂ at temperatures at about 1900°F (1040°C).

Using these conditions, little or no reduction of NO was observed. Final NO concentrations were in excess of 570 ppm. This illustrates the fact that injection of cyanuric acid into combustion effluents is not in itself an effective process for removing NO in the absence of stainless steel.

### Example 5

In this example the same facility and reaction conditions as those set forth in Example 4 were used. The nitrogen equivalent of added cyanuric acid was about 1.5 times the inlet NO.

In this example cyanuric acid was decomposed in an oxygen deficient zone with an overall stoichiometry of 0.99. The reaction of the cyanuric acid decomposition products and NO was allowed to occur subsequently in a downstream zone with an overall stoichiometry of 1.01. The temperature of the decomposition zone was held at about 1900°F (1040°C) and the temperature in the reaction zone was about 1900°F (1040°C). The concentration of NOₓ following the selective reaction zone was 115 ppm.

As in Example 3, this example demonstrates that remarkably higher reduction efficiencies can be achieved using the two-zone process of the present invention.

### Example 6 (comparative)

In this example a flow reactor having stainless steel walls was employed. The nitrogen equivalent of added cyanuric acid was about 1.5 times the inlet NO. The only species in the reactor other than the NO and cyanuric acid reactants was argon. The initial concentration of NO was about 600 ppm and the reactor was maintained at a temperature of about 1200°F (650°C).

Under these conditions the final NO concentration was about 265 ppm. These results indicate that the process described generally by Perry is effective under idealized conditions.

### Example 7 (comparative)

In this example the same conditions as those described in Example 6 were produced. The flow reactor, however, was equipped with quartz walls. Under these conditions the NO concentration was reduced from 600 ppm to about 565 ppm.

These results indicate that in the absence of stainless steel, the single step process described above is not effective in reducing NO emissions.

### Example 8

Data were obtained using a six-inch-diameter refractory-lined furnace where the primary combustion zone was fired with natural gas at a firing rate of 50,000 BTU per hour. The gas phase NO concentration prior to cyanuric acid injection was about 600 ppm.

An initial fuel-rich, oxygen-free zone was maintained, the stoichiometric ratio being 0.99. The temperature in the first zone was maintained at approximately 1900°F (1040°C) . Cyanuric acid was injected into this zone in the form of a solid. Cyanuric acid was allowed to react in this zone for approximately 0.3 seconds.

Subsequently, air was added to the reactants to bring the stoichiometric ratio up to 1.02. The temperature within the oxygen-rich environment was maintained at approximately 1600°F (870°C). Mixing between the cyanuric acid decomposition products and the combustion effluents in the second zone took place for approximately 0.5 seconds.

Under these conditions it was found that the concentration of NOₓ was reduced from an initial concentration of about 600 ppm to a final concentration of about 30 ppm.

### Example 9 (comparative)

Data were obtained using a six-inch-diameter refractory-lined furnace where the primary combustion zone was fired with sulfur containing natural gas at a firing rate of 50,000 BTU per hour. The gas phase SO₂ concentration prior to CaO injection was 4000 ppm.

The overall stoichiometric ratio being 1.25, the temperature at the point of injection was approximately 2200°F (1200°C). CaO was injected into this zone in the form of a slurry with the Ca/S ratio being 2.0. The reactants were allowed to react in this zone for approximately 400 milliseconds.

Under these conditions it was found that the concentration of SO₂ was reduced from an initial concentration of 4000 ppm to a final concentration of 1300 ppm.

### Example 10

In this example the same facility and reaction conditions as set forth in Example 3 were used. In this example, however, ammonia gas was added instead of urea and the nitrogen equivalent in the ammonia was 1.5 times the inlet NO.

In this example the ammonia was decomposed in an oxygen deficient zone with an overall stoichiometry of 0.99. The reaction of the ammonia decomposition products and NO was allowed to occur subsequently in a downstream zone with an overall stoichiometry of 1.02. The temperature at the point of NH₃ injection and decomposition was held at about 1900°F (1040°C) and the temperature at the beginning of the reaction zone where the final burnout air was added was about 1550°F (850°C). The concentration of NO following the selective reaction zone was 120 ppm corresponding to a 50% overall reduction.

This example demonstrates that good NOₓ reduction efficiencies can be achieved using ammonia gas as a selective reducing agent with the two zone process of the present invention.

### Example 11 (comparative)

In Example 11 the same facility and reaction conditions as set forth in Example 1 were used. Ammonium sulfate was added to provide the nitrogen equivalent of about 1.5 times the inlet NO.

In this example the ammonium sulfate was added under excess air conditions at a temperature of approximately 2100°F (1150°C). The overall stoichiometry was 1.25 corresponding to 25% excess O₂. The ammonium sulfate was allowed to decompose and selectively reduce the NOₓ, both under excess oxygen conditions. The concentration of NOₓ following the reaction was about 95 ppm.

This example demonstrates that ammonium sulfate can be used to produce significant NOₓ reduction under excess air conditions according to the existing art; however, the temperature window at which this occurs is extremely narrow. In this example increasing or decreasing the temperature by as little as 150°F (80°C) resulted in an emissions increase from 95 ppm to approximately 180 ppm.

### Example 12

In Example 12, the same facility and reaction conditions as set forth in Example 3 were used. Ammonium sulfate was added at a flow rate to provide the nitrogen equivalent of 1.5 times the inlet NO.

In this example the ammonium sulfate was decomposed in an oxygen deficient zone with an overall stoichiometry of 0.99. The reaction of the ammonium sulfate decomposition products and NO was allowed to occur subsequently in a downstream zone with an overall stoichiometry of 1.02. The temperature at the point of ammonium sulfate injection in the decomposition zone was held at about 1870°F (1020°C) and the temperature at the beginning of the reaction zone where the final burnout air was added was about 1560°F (850°C).

Using these conditions about 85% reduction of NO was observed. The final NO concentration was about 34 ppm. This example demonstrates that extremely high reduction efficiencies can be achieved using the two zone process of this invention in conjunction with a solid -NH containing salt.

### Example 13

Data were obtained using a six-inch-diameter refractory-lined furnace where the primary combustion zone was fired with natural gas at a firing rate of 50,000 BTU/hr. The gas phase NO concentration in the primary zone was 80 ppm.

An initial, oxygen-free zone was maintained, the stoichiometric ratio being 0.90. Urea was injected into this initial, oxygen-free zone at a temperature of approximately 1870°F (1020°C). The urea was allowed to decompose in this zone for approximately 0.15 seconds.

Subsequently, air containing NO was added to the stream from the decomposition zone. The NO concentration in the air stream was the equivalent of 160 ppm so that the total available NO was 240 ppm. The temperature of the bulk gas at the point of air/NO injection was 1550°F (850°C).

Under these conditions it was found that the concentration of NOₓ in the exhaust was approximately 66 ppm. These results demonstrate that the selective reducing agent can be decomposed in a fuel-rich, moderate temperature decomposition zone fully separate from the NOₓ to be reduced and then the decomposition products can be added to the stream containing the NO.

### Example 14

Data were obtained using a six-inch-diameter refractory-lined furnace with a primary combustion zone fired with natural gas at a firing rate of 50,000 BTU/hour. The gas phase NO concentration prior to ammonium sulfate injection was 240 ppm. The nitrogen equivalent in the ammonium sulfate was 1.5 times the inlet NO.

An initial oxygen-free zone was maintained, the stoichiometric ratio of this zone being 0.95. Ammonium sulfate was injected at approximately 1900°F (1040°C) as a dry solid and allowed to decompose.

Subsequently, air was added to the reactants to bring the stoichiometric ratio up to 1.05. The temperature at the air injection point was approximately 1600°F (870°C).

Under these conditions it was found that the concentration of NOₓ was reduced from an initial concentration of 240 ppm to a final concentration of 100 ppm. This example illustrates that significant reductions can be achieved using the two-zone concept of this invention at non-optimum stoichiometric ratios.

### Example 15 (comparative)

Data were obtained using an eight-inch-diameter refractory-lined furnace where the primary combustion zone was fired with Illinois coal at a firing rate of 50,000 BTU/hour. Commercial quicklime (CaO) was injected as a dry powder at a flow rate to provide a Ca/SO₂ molar ratio equivalent to about 2.0. The dry quicklime was injected at approximately 2300°F (1250°C) and the overall stoichiometry was maintained at approximately 1.25.

Under these conditions it was found that the concentration of SO₂ in the exhaust was reduced by approximately 22%. These results show that relatively poor SO₂ capture efficiencies are achieved using commercial quicklime.

### Example 16 (comparative)

Data were obtained using the same facility and reaction conditions as set fort in Example 15. In this instance a slurry prepared by mixing the commercial quicklime with water was injected at 2300°F (1250°C) with a calcium content equivalent to Ca/SO₂ ratio of 2.0.

Under these conditions it was found that the concentration of SO₂ in the exhaust was reduced by almost 60%. These data show that remarkably higher sulfur capture efficiencies can be achieved using commercial quicklime with slurry injection than with dry powder injection.

### Example 17

Data are obtained using a six-inch-diameter refractory-lined furnace where the primary combustion zone is fired with natural gas at a firing rate of 50,000 BTU per hour. The gas phase NO concentration prior to cyanuric acid injection is 600 ppm and the SO₂ concentration is 4000 ppm.

An initial oxygen-free zone containing CO and H₂O is maintained, the stoichiometric ratio being 0.99. The temperature in the first zone is maintained at approximately 1900°F (1040°C). Cyanuric acid is injected into this zone in the form of a solid. Cyanuric acid is allowed to react in this zone for approximately 0.3 seconds.

Subsequently, the cyanuric acid decomposition products are added to a reaction zone having an excess of oxygen containing the NOₓ to be reduced. In particular the stoichiometric ratio is 1.1. The temperature within the oxygen-rich environment is maintained at approximately 1600°F (870°C). Mixing between the cyanuric acid decomposition products and the combustion effluents in the second zone takes place for approximately 0.3 seconds.

In addition, a CaO slurry is injected into the reaction zone combustion products at 2200°F (1200°C).

Under these conditions it is found that the concentration of NOₓ is reduced from an initial concentration of 600 ppm to a final concentration of 30 ppm and the SO₂ concentration is reduced from an initial concentration of 4000 ppm to 1300 ppm.

### Example 18

Data are obtained using a 500 MW pulverized coal-fired boiler where the primary combustion zone is fired with a high sulfur midwestern bituminous coal. The primary zone in the lower furnace is fired under normal combustion conditions with excess oxygen corresponding to an overall stoichiometry of 1.05. Natural gas is injected above the primary combustion zone to reduce the overall stoichiometry to 0.97. Subsequently a CaO slurry containing calcium equivalent to a Ca/SO₂ ratio of 2.5 is injected at 2200°F (1200°C). Further downstream the final burnout air is added in the progressively staged manner. The initial air fraction includes an ammonium sulfate solution with a nitrogen content equivalent to 2.0 times the NOₓ. This first airstream is injected at 1850°F (1010°C) and is at the flow rate required to increase the overall stoichiometry to 1.02. Approximately 100 ms later the final remaining burnout air is added to raise the overall stoichiometry to 1.2.

Under these conditions it is found that the concentration of NOₓ is reduced from an uncontrolled concentration of 550 ppm to a final concentration of 40 ppm. The SO₂ concentration is reduced from an initial concentration of 4000 ppm to 1500 ppm.

### Example 19

Data are obtained using a large grate-fired incinerator which is charged with municipal solid waste at a rate of 1800 tons/day. The overall stoichiometry in the primary combustion zone corresponds to 1.5 (50% excess oxygen).

Ammonium sulfate is decomposed in a separate chamber by passing fuel-rich combustion products from a separate natural gas fired flame through a bed of ammonium sulfate. The temperature of this bed is maintained at 1900°F (1040°C) and the nominal stoichiometry of the fuel-rich products is 0.99. The effluent from this decomposition zone is injected into the exhaust gas stream from the municipal waste incinerator at a temperature of 1600°F (870°C). The equivalent nitrogen flow rate in the ammonium sulfate decomposition products is maintained at 3.0 times the NOₓ flow from the incinerator.

Under these conditions it is found that the concentration of NOₓ is reduced from an initial concentration of 900 ppm to a final concentration of 300 ppm.

### Example 20

Data are obtained using a 350 cubic inch V8 engine where the engine is fueled with gasoline. The engine is tuned such that the stoichiometry in the combustion zone is 0.98. The combustion products flow from the engine at approximately 900°F (480°C) and enter a decomposition zone where urea is being decomposed by contacting with the oxygen deficient combustion products.

Subsequently, final burnout air is added to produce a slight excess of oxygen corresponding to a stoichiometric ratio of 1.01. Under these conditions it is found that the concentration of NOₓ is reduced from an initial concentration of 3000 ppm to a final concentration of 500 ppm when the urea decomposition rate corresponds to an equivalent nitrogen to NO flow of 3.0.

### IV. Summary

In summary, it can be seen that using the two zone reaction method of introducing selective NOₓ reducing agents into an effluent stream provides extremely favorable results. In particular, NOₓ emissions can be reduced in excess of 90% with total NOₓ emissions being below 100 ppm. The present invention has potential for use in controlling emissions from numerous types of combustion emission sources including stationary boilers and the like, as well as motor vehicles.

The present invention provides that -NH and -CN containing selective reducing agents are decomposed into certain decomposition products in an oxygen-deficient or oxygen-free zone containing CO as the result of fuel-rich combustion processes. This zone is maintained at a temperature of from 1200°F to 1900°F (650°C to 1040°C). Once the decomposition of the selective agent is at least partially complete, the decomposition products are introduced into a second reaction zone having an excess of oxygen. The temperature within this zone is maintained at between 800°F and 2400°F (425°C - 1300°C)
Furthermore, it will be appreciated that SOₓ control can also be combined with control of NOₓ using this system. It is presently preferred to inject CaO in various forms along with cyanuric acid into the effluent stream. This results in good control of SOₓ.

## Claims

1. A process for selectively reducing nitrogen oxides in a gaseous combustion effluent stream comprising introducing a nitrogen-containing reducing agent into a first oxygen-deficient and fuel-rich zone and introducing the resulting mixture into a second fuel-lean zone having an excess of oxygen, characterised in that it comprises the steps of
a) introducing a reducing agent having at least one functional group selected from the group comprising -NH and -CN into a first gaseous decomposition zone being fuel-rich and oxygen deficient or oxygen free and being maintained at a temperature in the range of from 1200°F (650°C) to 1900°F (1040°C)
b) allowing the reducing agent sufficient residence time within the decomposition zone to allow for its decomposition and for the mixing of the gaseous species within the decomposition zone;
c) introducing the resulting mixture from the decomposition zone to a second fuel-lean reaction zone having an excess of oxygen and through which the combustion effluent stream is being directed, the temperature in the reaction zone being maintained in the range of from 800°F (425°C) to 2400°F (1300°C); and
d) allowing the mixture from the decomposition zone sufficient residence time within the reaction zone to allow the reduction of the NOₓ within the combustion effluent.

2. A process according to claim 1 characterised in that the selected reducing agent is cyanuric acid.

3. A process according to claim 1 or 2, characterised in that the temperature maintained within the decomposition zone is within the range of from 1400°F (760°C) to 1800°F (980°C) and the temperature in the reaction zone is maintained in the range of from 1200°F (650°C) to 1800°F (980°C).

4. A process according to claim 1, characterised in that the selective reducing agent is urea.

5. A process according to claim 1, characterised in that the selective reducing agent is a compound selected from the group consisting of ammonium sulfate, ammonium carbonate, ammonium bicarbonate, ammonium formate, ammonium oxalate, ammonia, biuret, triuret, NH₂CN, Ca(CN)₂, CaCN₂, NaOCN, dicyanodiamide and melamine.

6. A process according to any one of claims 1 to 5 characterised in that it also comprises:
(a) introducing an SOₓ removal agent into the stream of combustion effluents, said combustion effluents having a temperature in the range of from 800°F (425°C) to 2800°F (1540°C) at the point at which the SOₓ removal agent is introduced; and,
(b) allowing the resulting mixture sufficient residence time to allow the reaction of SOₓ with the SOₓ removal agent whereby SOₓ is also removed from the combustion effluent stream, said residence time being in the range of from 50 milliseconds to 5 seconds.

7. A process according to claim 6, characterised in that the SOₓ removal agent is selected from the group consisting of limestone, quicklime, and hydrated lime.

8. A process according to any one of claims 1 to 7, characterised in that the residence time within the decomposition zone is 5 milliseconds to 5 seconds and the residence time within the reaction zone is from 30 milliseconds to 5.0 seconds.

9. A process according to any one of claims 1 to 8, characterised in that the equivalent mole ratio of nitrogen in the reducing agent to NOₓ in the combustion effluent stream is in the range of from 0.5:1 to 10:1.

10. A process according to any one of claims 1 to 9, characterised in that the equivalent mole ratio of nitrogen in the reducing agent to NOₓ is in the range of from 0.7:1 to 3:1.

11. A process according to any one of claims 1 to 10, characterised in that the air to fuel stoichiometric ratio in the decomposition zone is within the range of 0.7 to 1.0.

12. A process according to any one of claims 1 to 11, characterised in that the oxygen-deficient decomposition zone is produced by using fuel injection.

13. A process according to any one of claims 1 to 12, characterised in that the excess of oxygen within the reaction zone is achieved by the injection of a gas or air containing oxygen into the effluent stream.

14. A process according to any one of claims 1 to 13, characterised in that the reducing agent is introduced into the first zone as a dry solid, as an aqueous solution, or as an alkanolic solution.

15. A process according to any one of claims 1 to 14, characterised in that the effectiveness of the reaction zone is enhanced by the addition of a radical generating promoter selected from the group consisting of hydrogen, methanol, natural gas, propane, carbon monoxide, and light petroleum fuels.

16. A process according to any one of claims 1 to 15, characterised in that the effectiveness of the reaction zone is enhanced by the use of a catalyst selected from the group consisting of stainless steel, Pt, Pd, W, Ni, Co, Au, Ag and Mn.

17. A process according to claim 6, characterised in that the SOₓ removal agent is added as a dry powder.

18. A process according to claim 6, characterised in that the SOₓ removal agent comprises a CaO slurry.

19. A process according to claim 18, characterised in that a surfactant is added to the slurry to enhance emission reduction.

## Patentansprüche

1. Verfahren zur selektiven Verminderung von Stickoxiden in einem Verbrennungs-Abgasstrom, bei welchem ein stickstoffhaltiges Reduktionsmittel in eine erste sauerstoffarme und brennstoffreiche Zone eingebracht wird und die entstandene Mischung in eine zweite brennstoffmagere Zone eingebracht wird, die einen Überschuss an Sauerstoff aufweist,
dadurch gekennzeichnet, dass es die folgenden Schritte umfasst:
a) ein Reduktionsmittel, das wenigstens eine funktionelle Gruppe enthält, die aus der Gruppe gewählt ist, welche -NH und -CN umfaßt, wird in eine erste gasförmige Zersetzungszone gebracht, die brennstoffreich und sauerstoffarm oder sauerstofffrei ist und die auf einer Temperatur im Bereich zwischen 1200° F (650° C) und 1900° F (1040° C) gehalten wird;
b) man gewährt dem Reduktionsmittel innerhalb der Zersetzungszone eine Verweilzeit, die ausreicht, dass ihre Zersetzung erfolgen und sich die gasförmigen Anteile in der Zersetzungszone durchmischen können;
c) die entstandene Mischung wird aus der Zersetzungszone in eine zweite brennstoffmagere Reaktionszone eingebracht, die einen Überschuss an Sauerstoff aufweist und durch die der Verbrennungs-Abgasstrom geführt wird, wobei die Temperatur in der Reaktionszone im Bereich zwischen 800° F (425° C) und 2400° F (1300° C) gehalten wird; und
d) man gewährt der Mischung aus der Zersetzungszone innerhalb der Reaktionszone eine Verweilzeit, die ausreicht, dass die Reduktion des NO_{X} in dem Verbrennungs-Abgas stattfinden kann.

2. Verfahren nach Anspruch 1, dadurch gekennzeichnet, dass das ausgewählte Reduktionsmittel Cyanursäure ist.

3. Verfahren nach Anspruch 1 oder 2, dadurch gekennzeichnet, dass die Temperatur in der Zersetzungszone im Bereich zwischen 1400° F (760° C) und 1800° F (980° C) gehalten wird und die Temperatur in der Reaktionszone im Bereich Zwischen 1200° F (650° C) und 1800° F (980° C) gehalten wird.

4. Verfahren nach Anspruch 1, dadurch gekennzeichnet, dass das spezifische Reduktionsmittel Harnstoff ist.

5. Verfahren nach Anspruch 1, dadurch gekennzeichnet, dass das spezifische Reduktionsmittel eine Verbindung ist, die aus der Gruppe ausgewählt ist, welche aus Ammoniumsulfat, Ammoniumcarbonat, Ammoniumbicarbonat Ammoniumformiat, Ammoniumoxalat, Ammoniak, Biuret, Triuret, NH₂CN, Ca(CN)₂, CaCN₂, NaOCN, Dicyandiamid und Melamin besteht.

6. Verfahren nach einem der Ansprüche 1 bis 5, dadurch gekennzeichnet, dass es auch umfasst:
a) ein SOₓ-entfernendes Mittel wird in den Verbrennungs-Abgasstrom eingebracht, wobei das Verbrennungs-Abgas eine Temperatur im Bereich zwischen 800° F (425° C) und 2800° F (1540° C) an der Stelle aufweist, an der das SOₓ-entfernende Mittel eingebracht wird; und
b) man gewährt der entstandenen Mischung eine Verweilzeit, die ausreicht, dass die Reaktion von SOₓ mit dem SOₓ-entfernenden Mittel stattfinden kann, wodurch auch SOₓ aus dem Verbrennungs-Abgastrom entfernt wird und wobei die Verweilzeit im Bereich zwischen 50 Millisekunden und 5 Sekunden beträgt.

7. Verfahren nach Anspruch 6, dadurch gekennzeichnet, dass das SOx-entfernende Mitel ausgewählt wird aus der Gruppe, welche aus Kalkstein, gebranntem Kalk und hydratisiertem Kalk besteht.

8. Verfahren nach einem der Ansprüche 1 bis 7, dadurch gekennzeichnet, dass die Verweilzeit innerhalb der Zersetzungszone 5 Millisekunden bis 5 Sekunden beträgt und die Verweilzeit innerhalb der Reaktionszone 30 Millisekunden bis 5,0 Sekunden beträgt.

9. Verfahren nach einem der Ansprüche 1 bis 8, dadurch gekennzeichnet, dass das äquivalente Molverhältnis von Stickstoff in dem Reduktionsmittel zu NOₓ im Verbrennungs-Abgasstrom im Bereich zwischen 0,5:1 und 10:1 ist.

10. Verfahren nach einem der Ansprüche 1 bis 9, dadurch gekennzeichnet, dass das äquivalente Molverhältnis von Stickstoff in dem Reduktionsmittel zu NOₓ im Bereich zwischen 0,7:1 und 3:1 ist.

11. Verfahren nach einem der Ansprüche 1 bis 10, dadurch gekennzeichnet, dass das stöchiometrische Verhältnis von Luft zu Brennstoff in der Zersetzungszone im Bereich zwischen 0,7 und 1,0 ist.

12. Verfahren nach einem der Ansprüche 1 bis 11, dadurch gekennzeichnet, dass die sauerstoffarme Zersetzungszone so hergestellt wird, dass Brennstoff eingespritzt wird.

13. Verfahren nach einem der Ansprüche 1 bis 12, dadurch gekennzeichnet, dass der Überschuss an Sauerstoff innerhalb der Reaktionszone dadurch erreicht wird, dass ein Gas oder Luft, die Sauerstoff enthalten, in den Abgasstrom eingespritzt werden.

14. Verfahren nach einem der Ansprüche 1 bis 13, dadurch gekennzeichnet, dass das Reduktionsmittel in die erste Zone als trockener Feststoff, als wässrige Lösung oder als alkanolische Lösung eingebracht wird.

15. Verfahren nach einem der Ansprüche 1 bis 14, dadurch gekennzeichnet, dass der Wirkungsgrad der Reaktionszone durch Zusatz eines Radikalbildners erhöht wird, der aus der Gruppe gewählt ist, die aus Wasserstoff, Methanol, Naturgas, Propan, Kohlenmonoxid und Leichtpetroleum-Brenstoffen besteht.

16. Verfahren nach einem der Ansprüche 1 bis 15, dadurch gekennzeichnet, dass der Wirkungsgrad der Reaktionszone durch Verwendung eines Katalysators erhöht wird, der aus der Gruppe gewählt ist, die aus rostfreiem Stahl, Pt, Pd, W, Ni, Co, Au, Ag und Mn besteht.

17. Verfahren nach Anspruch 6, dadurch gekennzeichnet, dass das SOx-enfernende Mittel als trockenes Pulver zugesetzt wird.

18. Verfahren nach Anspruch 6, dadurch gekennzeichnet, dass das SOx-enfernende Mittel eine Aufschlämmung von CaO umfasst.

19. Verfahren nach Anspruch 18, dadurch gekennzeichnet, dass eine oberflächenaktive Substanz der Aufschlämmung zugesetzt wird, um die Emission zu verringern.

## Revendications

1. Procédé de réduction sélective des oxydes d'azote dans un flux d'effluents de combustion gazeux, comprenant les étapes consistant à introduire un agent réducteur contenant de l'azote dans une première zone riche en combustible et pauvre en oxygène et à introduire le mélange obtenu dans une seconde zone pauvre en combustible et présentant un excédent d'oxygène, caractérisé en ce que ledit procédé comprend les étapes suivantes consistant à :
a) introduire un agent réducteur présentant au moins un groupe fonctionnel choisi parmi le groupe comprenant les - NH et les -CN dans une première zone de décomposition gazeuse riche en combustible et pauvre en oxygène ou exempte d'oxygène et qui est maintenue à une température comprise entre 1200°F (650°C) et 1900°F (1040°C) ;
b) maintenir l'agent réducteur pendant un temps de séjour suffisant à l'intérieur de la zone de décomposition, pour permettre la décomposition dudit agent ainsi que le mélange des espèces gazeuzes à l'intérieur de la zone de décomposition ;
c) introduire le mélange obtenu de la zone de décomposition dans une seconde zone de réaction pauvre en combustible, présentant un excédent d'oxygène et à travers laquelle est dirigé le flux d'effluents de combustion, la température dans la zone de réaction étant maintenue dans une plage de 800°F (425°C) à 2400°F (1300°C) ; et
d) laisser le mélange provenant de la zone de décomposition pendant un temps de séjour suffisant à l'intérieur de la zone de réaction pour permettre la réduction des NOₓ dans les effluents de combustion.

2. Procédé selon la revendication 1, caractérisé en ce que l'agent réducteur choisi est de l'acide cyanurique.

3. Procédé selon la revendication 1 ou 2, caractérisé en ce que la température maintenue à l'intérieur de la zone de décomposition est comprise entre 1400°F (760°C) et 1800°F (980°C) et en ce que la température à l'intérieur de la zone de réaction est maintenue dans une plage de 1200°F (650°C) à 1800°F (980°C).

4. Procédé selon la revendication 1, caractérisé en ce que l'agent de réduction sélective est de l'urée.

5. Procédé selon la revendication 1, caractérisé en ce que l'agent de réduction sélective est un composé choisi parmi le groupe constitué du sulfate d'ammonium, du carbonate d'ammonium, du bicarbonate d'ammonium, du formiate d'ammonium, de l'oxalate d'ammonium, de l'ammoniaque, du biuret, du triuret, du NH₂CN, du Ca(CN)₂, du CaCN₂, du NaOCN, du dicyanodiamide et de la mélamine.

6. Procédé selon l'une quelconque des revendications 1 à 5, caractérisé en ce que ledit procédé comprend également les étapes consistant à :
(a) introduire un agent d'élimination des SOₓ dans le flux des effluents de combustion, lesdits effluents de combustion étant à une température comprise entre 800°F (425°C) et 2800°F (1540°C) au moment où l'agent d'élimination des SOₓ est introduit ; et
(b) laisser au mélange obtenu un temps de séjour suffisant pour permettre la réaction des SOₓ avec l'agent d'élimination des SOₓ, les SOₓ étant ainsi éliminés du flux des effluents de combustion, ledit temps de séjour étant compris entre 50 millisecondes et 5 secondes.

7. Procédé selon la revendication 6, caractérisé en ce que l'agent d'élimination des SOₓ est choisi parmi le groupe constitué de la pierre à chaux, de la chaux vive et de la chaux hydratée.

8. Procédé selon l'une quelconque des revendications 1 à 7, caractérisé en ce que le temps de séjour à l'intérieur de la zone de décomposition est compris entre 5 millisecondes et 5 secondes et le temps de séjour à l'intérieur de la zone de réaction est compris entre 30 millisecondes et 5,0 secondes.

9. Procédé selon l'une quelconque des revendications 1 à 8, caractérisé en ce que le ratio molaire en équivalent d'azote présent dans l'agent réducteur par rapport aux NOₓ présents dans le flux des effluents de combustion est compris entre 0,5 : 1 et 10 : 1.

10. Procédé selon l'une quelconque des revendications 1 à 9, caractérisé en ce que le ratio molaire en équivalent d'azote présent dans l'agent réducteur par rapport aux NOₓ est compris entre 0,7 : 1 et 3 : 1.

11. Procédé selon l'une quelconque des revendications 1 à 10, caractérisé en ce le rapport stoechiométrique air-combustible dans la zone de décomposition est compris entre 0,7 et 1,0.

12. Procédé selon l'une quelconque des revendications 1 à 11, caractérisé en ce que l'on crée la zone de décomposition pauvre en oxygène en injectant du combustible.

13. Procédé selon l'une quelconque des revendications 1 à 12, caractérisé en ce que l'excédent d'oxygène à l'intérieur de la zone de réaction est obtenu en injectant dans le flux d'effluents un gaz ou de l'air contenant de l'oxygène.

14. Procédé selon l'une quelconque des revendications 1 à 13, caractérisé en ce que l'agent réducteur est introduit dans la première zone sous la forme d'un solide anhydre, d'une solution aqueuse, ou d'une solution alcanolique.

15. Procédé selon l'une quelconque des revendications 1 à 14, caractérisé en ce que l'on augmente l'efficacité de la zone de réaction en ajoutant un générateur de radicaux, choisi parmi le groupe constitué de l'hydrogène, du méthanol, du gaz naturel, du propane, du monoxyde de carbone et de combustibles issus du pétrole léger.

16. Procédé selon l'une quelconque des revendications 1 à 15, caractérisé en ce que l'on augmente l'efficacité de la zone de réaction en utilisant un catalyseur choisi parmi le groupe constitué de l'acier inoxydable, du Pt, du Pd, du W, du Ni, du Co, de l'Au, de l'Ag et du Mn.

17. Procédé selon la revendication 6, caractérisé en ce que l'agent d'élimination des SOₓ est ajouté sous la forme d'une poudre anhydre.

18. Procédé selon la revendication 6, caractérisé en ce que l'agent d'élimination des SOₓ comprend une boue liquide de CaO.

19. Procédé selon la revendication 18, caractérisé en ce qu'un surfactant est ajouté à la boue liquide afin d'améliorer la réduction des émissions.
